# EUROPEAN PATENT APPLICATION

(11) **EP 2 341 574 A2**
(43) Date of publication of application: **06.07.2011**
(21) Application number: 10163095.2
(22) Date of filing: 18.05.2010
(51) Int. Cl.: H01M 8/04

(54) **Random controlled fuel cell power module**

(30) Priority: 30.12.2009 TW 098145689
(71) Applicant: Chung-Hsin Electric and Machinery Manufacturing Corp., Taipei County (TW)
(72) Inventor: Chen, Yu-Jen, 33383, Kwei Shan Township (TW); Chou, Chen-Kun, 33383, Kwei Shan Township (TW); Wu, Yue-Lin, 33383, Kwei Shan Township (TW); Chen, Zong-Ji, 33383, Kwei Shan Township (TW); Wu, Chi-Bin, 33383, Kwei Shan Township (TW)
(74) Representative: Viering, Jentschura & Partner

(57) **Abstract**

The present invention discloses a random controlled fuel cell power module (100). The random controlled fuel cell power module (100) includes a power module system (10), a current detection unit (20), and a random control unit (30). The power module system (10) is composed of at least two parallel-connected DC/DC converters (10a)(10b), for providing the power for a load (2). The current detection unit (20) detects a load current value of the load (2). The random control unit (30) reads the load current value and randomly assigns a control mode to activate the DC/DC converters (10a)(10b) according to the load current value, so that the DC/DC converters (10a)(10b) can be equally used. Therefore, the failure rate of the DC/DC converters (10a)(10b) is reduced, the life of the power module system is relatively prolonged, and the stability of the power module system is simultaneously increased.

## Description

### Field of the Invention

The present invention relates to a random controlled fuel cell power module, and more particularly, to a random controlled fuel cell power module that controls operation of a power module system in a random manner according to a load current value, so as to equally use plural converters, and thereby reduce failure rate while increasing the stability of the power module system.

### Background of the Invention

With the increasing consumption of global energy and the enhancement in environmental protection consciousness, traditional energy resources such as oil and firepower are becoming limited, causing research in new-generation energy to continue to emerge. The research of fuel cells is one such topic. At present, fuel cells are applied in a wide range, including power, industry, transport, space and military use, and various products have been developed based thereon, such as power resources for power plants, spare batteries, portable power supply, forklifts, robots, motor-driven cars, small submarines, and even spaceships and space shuttles.

Fuel cells are valued for their varying features catering to the modern trend, features that also denote their development in the future power-generating applications. The first feature is efficiency. Fuel cells have a remarkable energy conversion efficiency, up to 40%. By working with cogeneration, which helps to recycle the heat waste released during reaction, fuel cells can achieve a total energy conversion efficiency of over 80%. The second feature is cleanness. Fuel cells are almost pollution-free in power generating process. The third feature is quiet operation. Noise measured nearby a fuel-cell power plant is relatively low.

However, fuel cells in nature have some shortcomings. One among others is polarization loss. Due to its internal chemical characteristics, after connecting with a load, the terminal voltage of a fuel cell will significantly change with the load current, with a variation rate up to 50%. Therein, the greater load current leads to a greater variation in the terminal voltage of the fuel cell. Therefore, the voltage generated by such a fuel cell is typically not put into use directly, but has to be stabilized by means of an electric power processing before output and use. For example, a DC/DC converter may be implemented for high-frequency switching so as to stabilize the voltage output by the fuel cell.

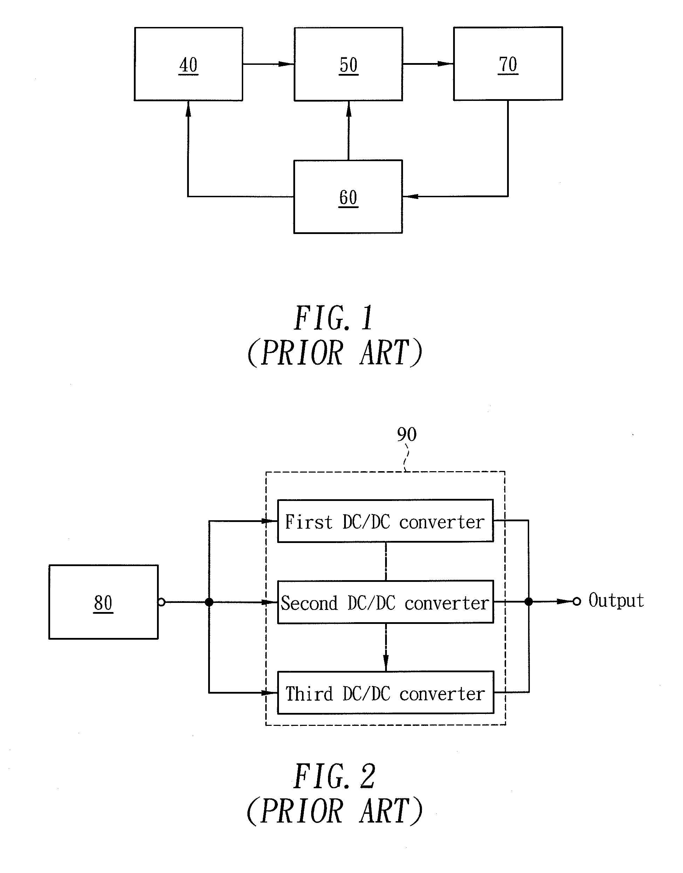

FIG. 1 and 2 are block diagrams of two different conventional fuel cell power modules, respectively.

As shown in FIG 1, the conventional fuel cell power module of the first type comprises a fuel cell 40, a DC/DC converter 50 and a controller 60. The DC/DC converter 50 serves to receive a voltage output by the fuel cell 40 and converts the same into an output voltage of the DC/DC converter 50 for being supplied to a load 70. The controller 60 serves to activate the DC/DC converters 50 and thereby modulates or increases the output voltage to be supplied to the load 70 according to a load current required by the load 70.

In addition, fuel cells may be classified by output power into various types, from 1,000 watts to 10,000 watts. Nevertheless, under technical consideration regarding electric power converters, for achieving high power output, converters can usually adopt the multistage parallel mode of single conversion module. Referring to FIG 2, the conventional fuel cell power module of the second type comprises a fuel cell 80 and a power module system 90 composed of a plurality of parallel-connected DC/DC converters. According to an output voltage of the fuel cell 80, one of the plural DC/DC converters is activated to operate and convert said output voltage into an output voltage of the activated DC/DC converter.

The foregoing conversion technology using the multistage parallel mode is generally known in two types, namely load current sharing and master-slave. Therein, load current sharing connects the output current to a current-sharing bus through a resistor. The current command on the current-sharing bus is the average of the current signals of the outputs of all the parallel-connected DC/DC converters. The average current signal will become the common reference command for all power module systems. However, load current sharing is hindered by its low fault tolerance.

Master-slave primarily uses one main DC/DC converter to drive a current-sharing bus to adopt the datum of its output current as a main current command, and makes the other DC/DC converters refer the main current command, then accordingly adjusting its output currents. Nevertheless, master-slave is impaired by its low reliability.

Furthermore, the known control methods described above, namely load current sharing and master-slave, both activate the converters in fixed sequences. It leads the DC/DC converters that are activated more frequently tend to die earlier deaths than the others, thereby affecting the stability and service life of the whole assembly of the DC/DC converters.

Hence, it would be desirable, while using DC/DC converters to stabilize an output voltage of a fuel cell and ensuring a balanced use of the DC/DC converters, to develop a circuit structure that reduces the failure rate, to prolong the life, and to increase the stability.

### Summary of the Invention

One objective of the present invention is to provide a random controlled fuel cell power module, which uses a random control mode to randomly assign an activation mode, and, according to a load current value required by a load, makes the assigned activation mode perform random control over a plurality of DC/DC converters. By so doing, the DC/DC converters are utilized equally, thereby reducing the failure rate.

Another objective of the present invention is to provide a random controlled fuel cell power module, which uses a random control unit to, according to a load current value detected by a current detection unit, perform random control over a plurality of DC/DC converters.

To achieve these and other objectives, the present invention provides a random controlled fuel cell power module, which comprises: a power module system composed of at least two parallel-connected DC/DC converters for providing power required by a load; a current detection unit detecting a load current value of the load; and a random control unit reading the load current value and randomly assigning a control mode so as to activate the DC/DC converter according to the load current value.

Through the implementation of the present invention, at least the following progressive effects are expected:
1. By using the random control mode, different said DC/DC converters can be randomly activated so as to effectively allow the different DC/DC converters to be alternately used, avoiding the repetitive use of one or two DC/DC converters, which thereby prolongs the service life of the entire system.
2. By using the random control mode, different said DC/DC converters can be randomly assigned according to the detected load current value, so that the DC/DC converters can be used equally, thereby reducing the failure rate of the DC/DC converters and increasing the stability of the power module system.

### Brief Description of the Drawings

The invention as well as a preferred mode of use and advantages thereof will be best understood by referring to the following detailed description of the illustrative embodiments in conjunction with the accompanying drawings, wherein:
FIG. 1 is a block diagram of a conventional fuel cell power module;
FIG. 2 is a block diagram of another conventional fuel cell power module;
FIG. 3 is a block diagram of a random controlled fuel cell power module according to one embodiment of the present invention;
FIG. 4 illustrates a random control unit according to one embodiment of the present invention;
FIG. 5 shows an activation mode of the random control unit according to one embodiment of the present invention;
FIG. 6 is a flow chart of the execution of the random control unit; and
FIG. 7 is a flow chart of the assignment of the random control unit.

### Detailed Description of the Invention

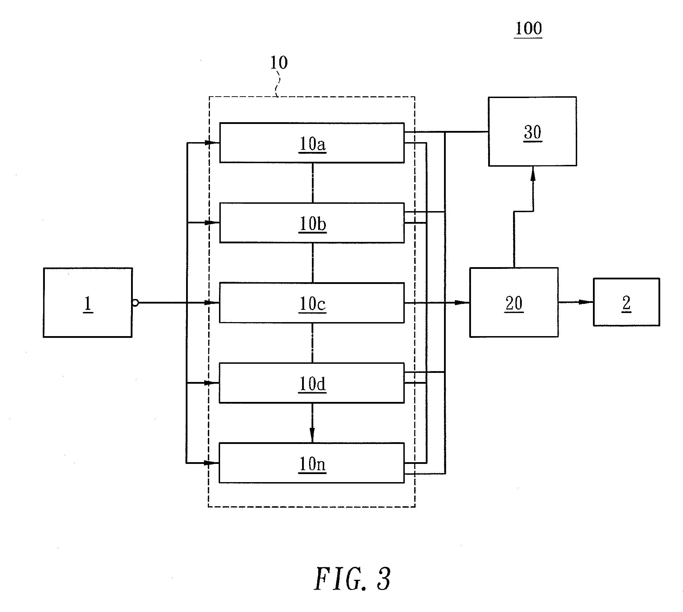

Referring to FIG 3, the present embodiment is a random controlled fuel cell power module 100, which includes: a power module system 10, a current detection unit 20 and a random control unit 30.

The power module system 10 is connected with a fuel cell 1 in series in order to compensate for the direct-current voltage output by the fuel cell 1, so as to facilitate stabilizing the direct-current voltage. The power module system 10 is composed of at least two parallel-connected DC/DC converters 10a, 10b, 10c, 10d...10n for providing the power for a load 2.

The current detection unit 20 is configured to detect a load current value of the load 2, and output a load current signal to the random control unit 30.

The random control unit 30 is configured to receive the load current signal, and read the load current signal into the corresponding load current value. The random control unit 30 then randomly activates n DC/DC converters 10a, 10b, 10c, 10d...and 10n according to the load current value.

First, the random control unit 30 randomly assigns one of the plurality of activation modes as an assigned control mode, and reads the load current value detected by the current detection unit 20. Afterward, the random control unit 30, according to a content of the assigned control mode corresponding to the load current value, outputs a control signal to control the DC/DC converters 10a, 10b, 10c, 10d...and 10n.

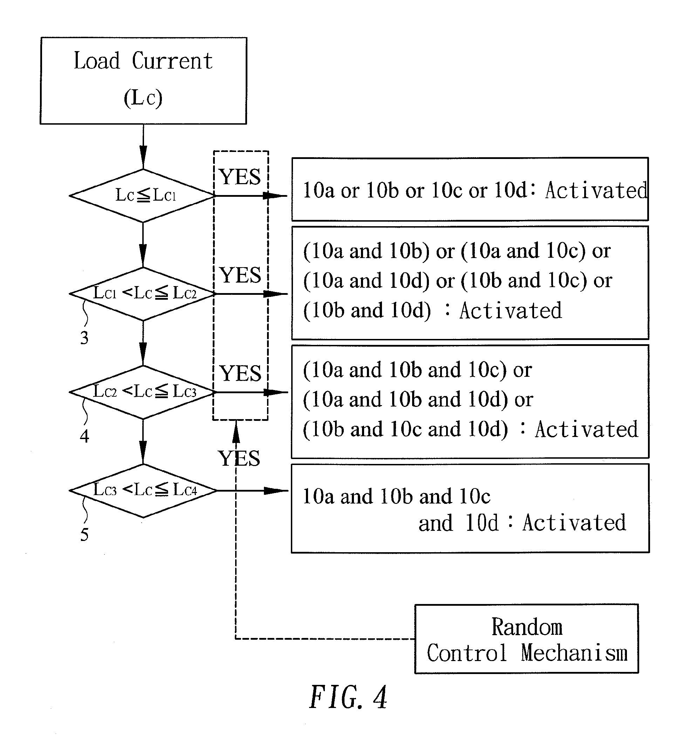

In particular, the random control unit 30 may be a microcontroller, which is preprogrammed with a plurality of current values according to the n DC/DC converters. The plurality of current values at least includes a minimum current value and a maximum current value, and can be divided into a plurality of current intervals. Therein, the plurality of current values may include Lc₁, Lc₂, Lc₃, ...and Lcₙ, and when the load current Lc is between Lc₁ and Lc₂, it is defined as a first current interval 3; when the load current Lc is between Lc₂ and Lc₃, it is defined as a second current interval 4; when the load current Lc is between Lc₃ and Lc₄, it is defined as a third current interval 5 (as shown in FIG 4). Analogously, when the load current Lc is between Lcₙ₋₁ and Lcₙ, it is defined as an n-1 current interval, wherein Lc₁ is a minimum current value while Lcₙ is a maximum current value, where n is a positive integer greater than 2.

Furthermore, the random control unit 30 is programmed with n activation modes according to the n-1 current intervals defined between the minimum current value and the maximum current value, and each of the activation modes includes n-1 on/off data. Each of the current intervals corresponds to at least one on/off datum while the contents of each said on/off datum corresponds to an on/off state of each said DC/DC converter, respectively.

The random control unit 30, upon reading the load current value, is able to determine the current interval corresponding to the load current value. When the load current value is smaller than the minimum load current value, the random control unit 30 randomly activates one of the DC/DC converters, and randomly assigns any of the activation modes as the assigned control mode.

When the load current value is between the minimum current value and the maximum current value, the random control unit 30 assigns one said on/off datum in the assigned control mode according to the current interval, and outputs a control signal according to the corresponding on/off datum so as to control the DC/DC converters.

When the current signal is greater than the maximum current value, it means that all the DC/DC converters have been actuated, and thus it is randomly reassigned to another said activation mode from the activation modes as the newly assigned control mode.

In FIG. 4, specific numbers are set out as an example to further illustrate the present invention. In the present embodiment, the power module system 10 has a first DC/DC converter 10a, a second DC/DC converter 10b, a third DC/DC converter 10c and a fourth DC/DC converter 10d (referring together to FIG 3). The random control unit 30 is preprogrammed with a first current value Lc₁, a second current value Lc₂, a third current value Lc₃ and a fourth current value Lc₄. Therein, the first current value Lc₁ is a minimum current value and the fourth current value Lc₄ is a maximum current value. Between the minimum current value and the maximum current value, there are successively defined a first current interval 3, a second current interval 4, and a third current interval 5. The first current interval 3 is between the first current value Lc₁ and the second current value Lc₂, and the second current intervals 4 is between the second current value Lc₂ and the third current value Lc₃, while the third current interval 5 is between the third current value Lc₃ and the fourth current value Lc₄.

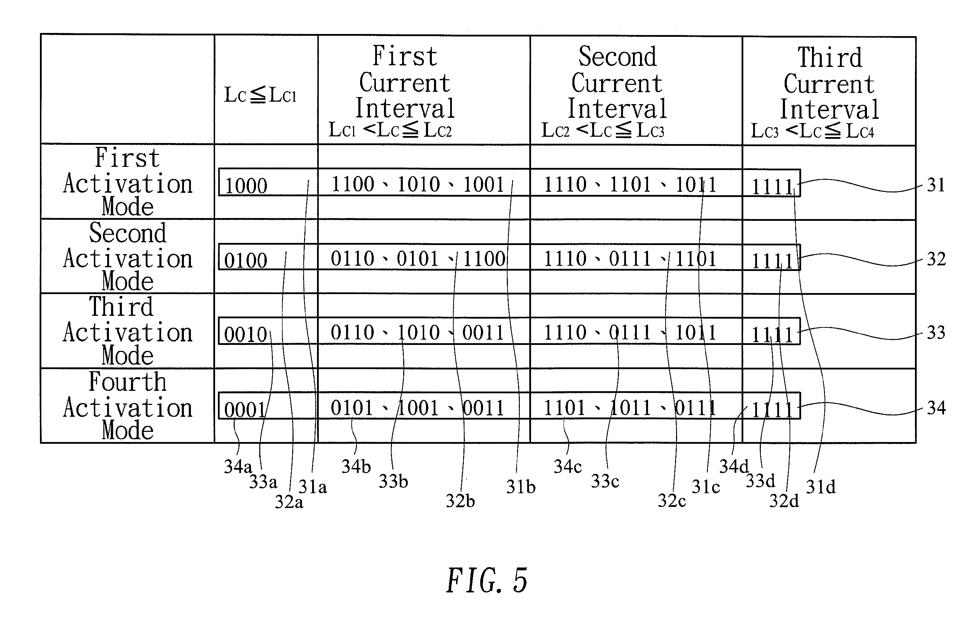

As shown in FIG. 5, the random control unit 30 then preprograms a first activation mode 31, a second activation mode 32, a third activation mode 33, and a fourth activation mode 34. Therein, the first activation mode 31 has on/off data 31a, 31b; 31c and 31d, and the second activation mode 32 has on/off data 32a, 32b, 32c and 32d, while the third activation mode 33 has on/off data 33a, 33b, 33c and 33d, and the fourth activation mode 34 has on/off data 34a, 34b, 34c and 34d. Therein, contents of the on/off data corresponds to on/off states of the first DC/DC converter 10a, the second DC/DC converter 10b, the third DC/DC converter 10c and the fourth DC/DC converter 10d, respectively.

Particularly, in the first activation mode, when the on/off datum 31 a corresponds to the load current value smaller than the minimum current value and has a content of 1000, where 0 denotes off and 1 denotes on, it represents the first DC/DC converter 10a being on, second DC/DC converter 10b being off, the third DC/DC converter 10c being off and the fourth DC/DC converter 10d being off.

Similarly, the on/off datum 31b corresponds to the first current interval 3 and has a content of 1100, 1010, 1001, where 0 denotes off and 1 denotes on, so it represents three different situations. The first situation is: the first DC/DC converter 10a being on, the second DC/DC converter 10b being on, the third DC/DC converter 10c being off and the fourth DC/DC converter 10d being off. The second situation is: the first DC/DC converter 10a being on, the second DC/DC converter 10b being off, the third DC/DC converter 10c being on and the fourth DC/DC converter 10d being off. The third situation is: the first DC/DC converter 10a being on, the second DC/DC converter 10b being off, the third DC/DC converter 10c being off and the fourth DC/DC converter 10d being on. Similarly, the on/off datum 31c corresponds to the second current intervals 4 and has a content of 1110, 1101, 1011. Similarly, the on/off datum 31d corresponds to the third current intervals 5 and has a content of 1111.

In the second activation mode, the on/off datum 32a corresponds to the load current value smaller than the minimum current value and has a content of 0100. The on/off datum 32b corresponds to the first current interval 3 and has a content of 0110, 0101, 1100. The on/off datum 32c corresponds to the second current interval 4 and has a content of 1110, 0111, 1101. The on/off datum 32d corresponds to the third current interval 5, and has a content of 1111.

In the third activation mode, the on/off datum 33a corresponds to the load current value smaller than the minimum current value and has a content of 0010. The on/off datum 33b corresponds to the first current interval 3 and has a content of 0110, 1010, 0011. The on/off datum 33c corresponds to the second current interval 4 and has a content 1110, 0111, 1011. The on/off datum 33d corresponds to the third current interval 5 and has a content of 1111.

In the fourth activation mode, the on/off datum 34a corresponds to the load current value smaller than the minimum current value and has a content of 0001. The on/off datum 34b corresponds to the first current interval 3 and has a content of 0101, 1001, 0011. The on/off datum 34c corresponds to the second current interval 4 and has a content 1101, 1011, 0111. The on/off datum 34d corresponds to the third current interval 5 and has a content of 1111.

Next, an example will depict the situation when the first activation mode 31 is assigned by the random control unit 30 as the assigned control mode. When the load current Lc continuously increases and becomes greater than the minimum current value (i.e. the first current value Lc₁), and the load current value detected by the current detection unit 20 is between the first current value Lc₁ and the second current value Lc₂, the random control unit 30 determines it as corresponding to the first current interval 3. Therefore, the random control unit 30 will, according to the on/off datum 31b in the first activation mode 31, turn on the first DC/DC converter 10a and the second DC/DC converter 10b, while turning off the third DC/DC converter 10c and the fourth DC/DC converter 10d; or turn on the first DC/DC converter 10a and the third DC/DC converter 10c, while turning off the second DC/DC converter 10b and the fourth DC/DC converter 10d; or turn on the first DC/DC converter 10a and the fourth DC/DC converter 10d, while turning off the second DC/DC converter 10b and the third DC/DC converter 10c.

When the load current Lc continuously increases to make the load current value detected by the current detection unit 20 between the second current value Lc₂ and the third current value Lc₃, the random control unit 30 determines it as corresponding to the second current interval 4. The random control unit 30 will, according to the on/off datum 31c in the first activation mode 31, turn on the first DC/DC converter 10a, the second DC/DC converter 10b and the third DC/DC converter 10c, while turning off the fourth DC/DC converter 10d; or turn on the first DC/DC converter 10a, the second DC/DC converter 10b and the fourth DC/DC converter 10d, while turning off the third DC/DC converter 10c; or turn on the first DC/DC converter 10a, the third DC/DC converter 10c and the fourth DC/DC converter 10d, while turning off the second DC/DC converter 10b.

When the load current Lc further increases continuously to allow the load current value to be detected by the current detection unit 20 to be between the third current value Lc₃ and the fourth current value Lc₄, the random control unit 30 then determines the current signal as corresponding to the third current interval 5. The random control unit 30 will, according to the on/off datum 31d in the first activation mode 31, output the control signal to turn on all the DC/DC converters 10a, 10b, 10c and 10d, and at the same time randomly reassign another said activation mode as the newly assigned control mode.

Thereby, the random control power module system 10 is enabled to alternately use different said DC/DC converters 10a, 10b, 10c and 10d, without excessively using some certain said DC/DC converters, which might reduce the service life and increase the failure rate of those DC/DC converters repetitively used, and lead to low system stability.

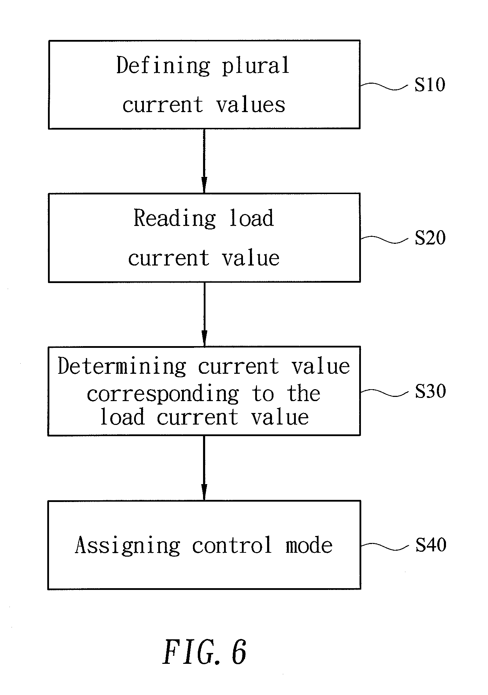

Referring to FIG. 6, in the present embodiment, the random control unit performs the following steps. First in step S10, a plurality of current values is defined, wherein the current values include a minimum current value and a maximum current value, and are divided into a plurality of current intervals. Each said activation mode in each said current interval corresponds to at least one on/off datum.

In step S20, the load current value is read. Then in step S30, the current interval corresponding to the load current value is determined. Afterward in step S40, the assigned control mode is assigned, by randomly assigning one said activation mode among the activation modes as the assigned control mode, and the DC/DC converters are activated according to the current interval corresponding to the load current value, in the light of the on/off datum corresponding to the assigned control mode.

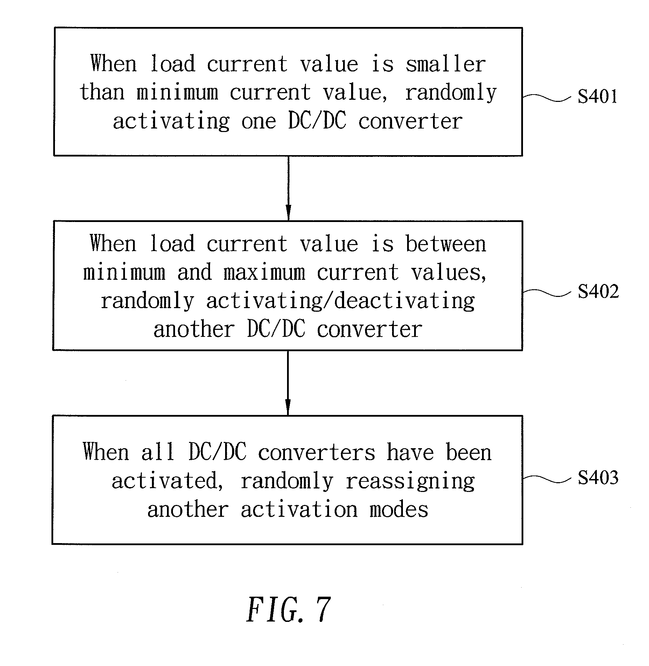

Referring to FIG 7, in the present embodiment, the random control unit assigns the control mode through the following steps. First in step S401, when the load current value is smaller than the minimum current value, one of the DC/DC converters is randomly activated. In step S402, when the load current value is between the minimum current value and the maximum current value, if the load current value continuously increases and turns to another said current interval, another said DC/DC converter is randomly activated. If the load current value continuously decreases and turns to another said current interval, any of the DC/DC converters will be randomly deactivated. Then in step S403, when all the DC/DC converters have been activated, another said activation mode is randomly reassigned among the activation modes as the newly assigned control mode.

To sum up, by using the random control mode, it is possible to randomly activate different DC/DC converters, so as to effectively allow the different DC/DC converters to be alternately used, avoiding the repetitive use of one or two of the DC/DC converters, which thereby prolongs the service life of the entire system. In addition, by using the random control mode, different said DC/DC converters can be randomly activated according to the detected load current value, so that the DC/DC converters can be used equally, thereby reducing the failure rate of the DC/DC converters and increasing the stability of the power module system.

The embodiments described above are intended only to demonstrate the technical concept and features of the present invention so as to enable a person skilled in the art to understand and implement the contents disclosed herein. It is understood that the disclosed embodiments are not to limit the scope of the present invention. Therefore, all equivalent changes or modifications based on the concept of the present invention should be encompassed by the appended claims.

## Claims

1. A random controlled fuel cell power module (100), comprising:
a power module system (10) composed of at least two parallel-connected DC/DC
converters (10a)(10b) for providing power for a load;
a current detection unit (20) detecting a load current value of the load (2); and
a random control unit (30) reading the load current value and randomly assigning a
control mode so as to activate the DC/DC converters (10a)(10b) according to the load current value.

2. The fuel cell power module (100) of Claim 1, wherein the random control unit (30) is a microcontroller.

3. The fuel cell power module (100) of Claim 1, wherein the random control unit (30) is preprogrammed with a plurality of activation modes, and the random control unit (30) performs steps of:
defining a plurality of current values, which include a minimum current value and a
maximum current value, and is divided into a plurality of current intervals, wherein each said activation mode in each said current interval corresponds to at least one on/off datum;
reading the load current value;
determining the current interval corresponding to the load current value; and
running the assigned control mode by randomly assigning one said activation mode
from the activation modes as the assigned control mode, and according to the current interval corresponding to the load current value, using one said on/off datum corresponding to the assigned control mode to activate the DC/DC converters (10a)(10b).

4. The fuel cell power module (100) of Claim 3, wherein running the assigned control mode comprises steps of:
when the load current value is smaller than the minimum current value, randomly
activating one of said DC/DC converters (10a)(10b);
when the load current value is between the minimum current value and the maximum current value, if the load current value continuously increases and turns into another said current interval, randomly activating an additional said DC/DC converter (10a)(10b), and if the load current value continuously decreases and turns into another said current interval, randomly deactivating one of the DC/DC converters (10a)(10b); and
when all the DC/DC converters are activated, randomly reassigning any of the
activation modes.

5. The fuel cell power module (100) of Claim 3, which has n said DC/DC converters (10a)(10b)...(10n), while the random control unit (30) is preprogrammed with n said activation modes, and there are n-1 said current intervals defined between the minimum current value and maximum current value, where n is a positive integer greater than 2.

6. The fuel cell power module (100) of Claim 3, which has a first DC/DC converter (10a), a second DC/DC converter (10b), a third DC/DC converter (10c), and a fourth DC/DC converter (10d), while the random control unit (30) is preprogrammed with a first activation mode, a second activation mode, a third activation mode, and a fourth activation mode, and there are a first current interval (3), a second current interval (4), and a third current interval (5) successively defined between the minimum current value and the maximum current value.

7. The fuel cell power module (100) of Claim 6, wherein contents of the on/off data are corresponding to on/off states of the first DC/DC converter (10a), the second DC/DC converter (10b), the third DC/DC converter (10c), and the fourth DC/DC converter (10d), respectively,
in the first activation mode, when the load current value is smaller than the minimum
current value, the first DC/DC converter (10a) being activated, and the on/off datum corresponding to the first current interval (3) of the first activation mode includes 1100, 1010, 1001; the on/off datum corresponding to the second current interval (4) of the first activation mode includes 1110, 1101, 1011; the on/off datum corresponding to the third current interval (5) of the first activation mode is 1111;
in the second activation mode, when the load current value is smaller than the
minimum current value, the second DC/DC converter (10b) being activated, and the on/off datum corresponding to the first current interval (3) of the second activation mode includes 0110, 0101, 1100, the on/off datum corresponding to the second current interval (4) of the second activation mode includes 1110, 0111, 1101, the on/off datum corresponding to the third current interval (5) of the second activation mode is 1111;
in the third activation mode, when the load current value is smaller than the minimum
current value, the third DC/DC converter (10c) being activated, and the on/off datum corresponding to the first current interval (3) of the third activation mode includes 0110, 1010, 0011, the on/off datum corresponding to the second current interval (4) of the third activation mode includes 1110, 0111, 1011, the on/off datum corresponding to the third current interval (5) of the third activation mode is 1111; and
in the fourth activation mode, when the load current value is smaller than the
minimum current value, the fourth DC/DC converter (10d) being actuated, and the on/off datum corresponding to the first current interval (3) of the fourth activation mode includes 0101, 1001, 0011, the on/off datum corresponding to the second current interval (4) of the fourth activation mode includes 1101, 1011, 0111, the on/off datum corresponding to the third current interval (5) of the fourth activation mode is 1111.
